# EUROPÄISCHE PATENTSCHRIFT

(11) **EP 1 979 655 B1**
(45) Veröffentlichungstag und Bekanntmachung des Hinweises auf die Patenterteilung: **17.03.2010**
(21) Anmeldenummer: 07702752.2
(22) Anmeldetag: 13.01.2007
(51) Int. Cl.: F16H 61/664, B60K 23/08, B60K 17/348, F16H 15/38

(54) **STUFENLOSES GETRIEBE UND VERFAHREN ZUR VERTEILUNG EINES DREHMOMENTES AUF ZWEI AUSGANGSWELLEN**
CONTINUOUSLY VARIABLE TRANSMISSION AND METHOD FOR DISTRIBUTING A TORQUE BETWEEN TWO OUTPUT SHAFTS
BOÎTE À VARIATION CONTINUE ET PROCÉDÉ DE DISTRIBUTION D'UN COUPLE SUR DEUX ARBRES DE SORTIE

(30) Priorität: 24.01.2006 DE 102006003244
(43) Veröffentlichungstag der Anmeldung: 15.10.2008
(73) Patentinhaber: Volkswagen Aktiengesellschaft, 38436 Wolfsburg (DE); NSK Ltd., Shinagawa-ku, Tokyo 141-8560 (JP)
(72) Erfinder: PETERSEN, Rainer, 38444 Wolfsburg (DE); SUE, Armin, 38527 Meine (DE)
(74) Vertreter: Löbbecke, Carsten
(86) Internationale Anmeldenummer: PCT/EP2007/000280
(87) Internationale Veröffentlichungsnummer: WO 2007/085354

(56) Entgegenhaltungen:
- EP-B1- 1 140 543
- DE-A1- 10 059 781
- DE-A1- 10 124 838
- US-A- 5 967 931

## Beschreibung

Die Erfindung betrifft ein stufenloses Getriebe, insbesondere für ein allradgetriebenes Kraftfahrzeug, mit zwei jeweils als Halbtoroidgetriebe ausgebildeten Teilgetrieben, die jeweils eine mit einer gemeinsamen Eingangswelle verbundene Antriebsscheibe, eine jeweils mit einer separaten Ausgangswelle verbundene Abtriebsscheibe, und mehrere mit Reibkontakt zwischen den beiden Triebscheiben angeordnete Zwischenrollen aufweisen, wobei die Zwischenrollen zur Auslösung einer die jeweilige Übersetzung ändernden Verkippung um eine ihnen jeweils zugeordnete Kippachse von Kraftstellelementen beaufschlagbar sind und wobei eine auf die Teilgetriebe wirksame Regeleinrichtung zur Regelung der Teilgetriebe gemäß einer Sollwertvorgabe vorgesehen ist.

Die Erfindung betrifft weiter ein Verfahren zur Verteilung eines Drehmomentes auf zwei Ausgangswellen in einem stufenlosen Getriebe, mit zwei jeweils als Halbtoroidgetriebe ausgebildeten Teilgetrieben, die jeweils eine mit einer gemeinsamen Eingangswelle verbundene und eine innere Torusringfläche aufweisende Antriebsscheibe, eine jeweils mit einer separaten Ausgangswelle verbundene und eine innere Torusringfläche aufweisende Abtriebsscheibe, und mehrere zwischen den beiden Triebscheiben mit Reibkontakt auf den Torusringflächen angeordnete und jeweils um eine Kippachse schwenkbare Zwischenrollen aufweisen, wobei die Zwischenrollen zur Auslösung einer die jeweilige Übersetzung ändernden Verkippung um eine ihnen jeweils zugeordnete Kippachse von Kraftstellelementen beaufschlagt werden, deren Ansteuerung über eine auf die Teilgetriebe wirksame Regeleinrichtung zur Regelung der Teilgetriebe gemäß einer Sollwertvorgabe erfolgt.

Stufenlose Getriebe in der Bauart von zwei Teilgetrieben in Halbtoroidbauweise sind seit längerem bekannt und stehen von verschiedenen Herstellern bereits als Erprobungsträger oder als Prototyp zur Verfügung. Ein wesentlicher Vorteil eines derartigen Toroidgetriebes besteht darin, dass ein eingangsseitiges Drehmoment ohne ein mechanisches Mittendifferenzial variabel auf die beiden Ausgangswellen und die mit diesen in Verbindung stehenden Antriebsachsen eines Kraftfahrzeugs verteilt werden kann. Gegenüber einer Ausführung in Volltoroidbauweise weist ein solches Getriebe in Halbtoroidbauweise geringere radiale Abmessungen und günstigere Reibverhältnisse zwischen den Torusringflächen und den Zwischenrollen auf. Weitergehende Informationen zu Toroidgetrieben sind u.a. der DE 198 26 591 A1 zu entnehmen.

Aus der EP 1 160 486 A2 ist ein mit zuschaltbarem Allradantrieb versehenes Kraftfahrzeug mit einem stufenlosen Getriebe bekannt, das aus zwei als Halbtoroidgetriebe ausgebildeten Teilgetrieben besteht, wobei die Ausgangswelle des ersten Teilgetriebes mit dem Achsdifferenzial der Hinterachse und die Ausgangswelle des zweiten Teilgetriebes über eine ein- und ausrückbare Trennkupplung mit dem Achsdifferenzial der Vorderachse in Verbindung steht. Zur Vermeidung einer Verspannung des Antriebsstrangs wird über entsprechende Sensoren ein Lenkeinschlag und (bei ausgerückter Trennkupplung) unterschiedliche effektive Laufradien der Räder der Vorderachse und der Hinterachse erfasst, daraus eine Drehzahlabweichung der Räder der Vorderachse berechnet, und zur Erzielung einer angepassten Abtriebsdrehzahl die Übersetzung des zweiten Teilgetriebes entsprechend geändert. Aufgrund der Übersetzungsabweichungen in den beiden Teilgetrieben ergibt sich eine gegenüber der ursprünglichen Verteilung von 50 : 50 geringfügig abweichende Verteilung des Drehmomentes auf die beiden Antriebsachsen.

In der JP 176861A/2003 ist dagegen ein allradgetriebenes Kraftfahrzeug mit einem stufenlosen Getriebe beschrieben, das aus zwei als Halbtoroidgetriebe ausgebildeten Teilgetrieben besteht, wobei die Ausgangswelle des ersten Teilgetriebes mit dem Achsdifferenzial der Vorderachse und die Ausgangswelle des zweiten Teilgetriebes über eine hydraulische Lamellenkupplung mit dem Achsdifferenzial der Hinterachse in Verbindung steht. Zur variablen Verteilung des Drehmomentes auf die beiden Antriebsachsen ist vorgesehen, die Lamellenkupplung unter Verringerung der Übersetzung des zweiten Teilgetriebes (Verstellung in Richtung Overdrive) schlupfend zu betreiben. Hierdurch ist jedoch nur eine Variation der Drehmomentverteilung auf die Vorderachse und die Hinterachse im Verhältnis zwischen 50 : 50 und 100 : 0 möglich, wobei durch den Schlupfbetrieb der Lamellenkupplung nachteilig Wirkungsgradverluste und Verschleiß in Kauf genommen werden müssen.

Dagegen ist aus der EP 1 140 543 B1, die als nächstliegender Stand der Technik gegenüber Ansprüchen 1 und 6 angesehen wird, ein stufenloses Getriebe für ein allradgetriebenes Kraftfahrzeug bekannt, bei dem das Drehmoment traktionsabhängig variabel auf die beiden Antriebsachsen verteilt wird. Das Getriebe besteht ebenfalls aus zwei als Halbtoroidgetriebe ausgebildeten Teilgetrieben. Die über eine Stirnradverzahnung mit der zugeordneten Abtriebsscheibe verbundene Ausgangswelle des ersten Teilgetriebes steht unmittelbar mit dem Achsdifferenzial der Vorderachse in Verbindung. Ebenso steht die über eine Stirnradverzahnung mit der zugeordneten Abtriebsscheibe verbundene Ausgangswelle des zweiten Teilgetriebes unmittelbar mit dem Achsdifferenzial der Hinterachse in Verbindung. Die Zwischenrollen der beiden Teilgetriebe sind zur Abstützung des jeweils übertragenen Drehmomentes und zur Auslösung einer Übersetzungsänderung in Richtung ihrer Kippachsen begrenzt axial verschiebbar gelagert und von Kraftstellelementen beaufschlagbar, die vorliegend hydraulisch ausgebildet sind. Die jeweilige Abstützkraft zur Abstützung des übertragenen Drehmomentes und die Stellkraft zur Auslösung einer Übersetzungsänderung wird vorliegend durch eine Druckdifferenz aus zwei gegensinnig wirkenden Drücken gebildet, die für jedes Teilgetriebe durch ein Servoventil eingeregelt wird, auf das einerseits die für beide Teilgetriebe identische Sollübersetzung eines Sollwertgebers und, separat für jedes Teilgetriebe, die durch einen Taster von einer der Zwischenrollen ermittelten Istübersetzung mechanisch einwirkt. Hierdurch wird unabhängig von den aktuellen Traktionsverhältnissen an den Antriebsachsen durch Anpassung der Abstützkräfte an den Zwischenrollen die vorgegebene Übersetzung beibehalten, so dass die Verteilung des Drehmoments auf die Vorderachse und die Hinterachse selbsttätig zwischen 100 : 0 und 0 : 100 variieren kann. Nachteilig an dieser Ausführung eines stufenlosen Getriebes ist die unzureichende Funktion eines Mittendifferenzials zum Ausgleich einer Drehzahldifferenz zwischen Vorderachse und Hinterachse, die z.B. bei Kurvenfahrt auftreten kann. Es kann daher in bestimmten Fahrsituationen zu Verspannungen des Antriebsstrangs kommen, die nur durch eine zusätzliche Regeleinrichtung mit zugeordneter Sensorik zu vermeiden wären. Im Übrigen wirkt die vollautomatische traktionsabhängige Verteilung des Antriebsmomentes der Erzielung einer gewünschten Fahrdynamik des Kraftfahrzeugs entgegen.

Es ist daher die Aufgabe der vorliegenden Erfindung, das aus der EP 1 140 543 B1 bekannte stufenlose Getriebe im Hinblick auf eine günstigere Drehmomentverteilung auf die Antriebsachsen und ein verbessertes Fahrverhalten des Kraftfahrzeugs weiterzubilden. Ebenfalls soll ein Verfahren zur Verteilung eines Drehmomentes auf zwei Ausgangswellen in einem derartigen stufenlosen Getriebe angegeben werden.

Diese Aufgaben werden erfindungsgemäß in Verbindung mit den Merkmalen der Oberbegriffe von Anspruch 1 bzw. Anspruch 6 dadurch gelöst, dass die Sollwertvorgabe die Vorgabe eines unabhängigen Sollwertes für jedes Teilgetriebe umfasst. Auf diese Weise kann flexibler auf unterschiedliche Fahrsituationen reagiert werden.

Erfindungsgemäß ist vorgesehen, dass die Regeleinrichtung derart ausgebildet und angeordnet ist, dass in einem Teilgetriebe die Übersetzung entsprechend einem vorgebbaren Übersetzungssollwert regelbar ist, und dass in dem anderen Teilgetriebe das übertragene Drehmoment entsprechend einem vorgebbaren Drehmomentsollwert regelbar ist.

Der Übersetzungssollwert für das erste Teilgetriebe wird dabei, wie bisher, von einer übergeordneten Fahrstrategie vorgegeben und bestimmt die Gesamtübersetzung des Antriebsstrangs des Kraftfahrzeugs. Der Drehmomentsollwert für das zweite Teilgetriebe kann dagegen entsprechend der aktuellen Fahrsituation von einer Fahrdynamikregelung vorgegeben werden und bestimmt die Verteilung des Drehmomentes auf die beiden Antriebsachsen. Kommt es nun zu Störeinflüssen, wie Kurvenfahrt und/oder Traktionsverlust an einer der Antriebsachsen und/oder unterschiedlichem dynamischem Rollradius, z.B. durch unterschiedlichen Reifendruck oder unterschiedliche Reifenabnutzung, so behält das erste Teilgetriebe die vorgegebene Übersetzung bei, während sich in dem zweiten Teilgetriebe die Übersetzung selbsttätig soweit verändert, dass das übertragene Drehmoment in diesem Teilgetriebe weiter dem vorgegebenen Drehmomentsollwert entspricht. Hierdurch wird z.B. bei Kurvenfahrt ohne eine Verspannung des Antriebsstrangs eine durch unterschiedliche Kurvenradien bedingte Drehzahldifferenz der beiden Antriebsachsen ohne zusätzlichen Regeleingriff ermöglicht (Differenzialfunktion). Auch ist das Fahrverhalten des Kraftfahrzeugs aktiv und bei geringerem Regelaufwand durch einen Fahrstrategieregler beeinflussbar, z.B. in Form über- oder untersteuernden Fahrverhaltens.

Wegen der hohen Energiedichte und der guten Steuerbarkeit ist die Regeleinrichtung bevorzugt als ein Hydrauliksystem mit mindestens einer Pumpe, einem Druckregler, und einem ersten Zweig für das übersetzungsgeregelte Teilgetriebe sowie einem zweiten Zweig für das drehmomentgeregelte Teilgetriebe ausgebildet, wobei jeder der beiden Zweige mindestens ein Steuerventil zur Steuerung einer Druckdifferenz zwischen zwei Stelldrücken enthält, die über Ringleitungen auf die zugeordneten Kraftstellelemente, welche auf die jeweils zugeordneten Zwischenrollen wirken, übertragbar ist.

Der erste Zweig der Regeleinrichtung weist zweckmäßig ein Steuerventil, vorzugsweise ein Servoventil mit Vorgabehülse auf, das mit einem Sollwertgeber für den Übersetzungssollwert und mit einem Istwertgeber für die Neigung zumindest einer der Zwischenrollen bezüglich ihrer Kippachse in Wirkverbindung steht. Der Begriff der Neigung kann sich bei der bevorzugten Ausführungsform, bei der die Verkippung jeder Zwischenrolle durch ein Verschwenken des entsprechenden Brückenträgers um eine in etwa quer zur Kippachse liegenden Schwenkachse initiiert wird, sowohl auf den Kipp- als auch auf den Schwenkwinkel beziehen. Bei einer anderen Ausführungsform, bei der die Verkippung jeder Zwischenrolle durch eine in Bezug auf die Kippachse axiale Verschiebung des entsprechenden Brückenträgers initiiert wird, bezieht sich der Begriff der Neigung nur auf den Kippwinkel.

Dabei kann das Steuerventil, wie es aus der EP 1 140 543 B1 bekannt ist, rein mechanisch ausgebildet sein und rein mechanisch mit den entsprechend ausgebildeten Soll- und Istwertgebern in Verbindung stehen. Möglich ist jedoch auch eine Ausbildung des Steuerventils als Magnetventil und eine elektrische Übermittlung zumindest eines der Übersetzungswerte, des Übersetzungssollwertes oder des Übersetzungsistwertes.

Der zweite Zweig der Regeleinrichtung weist bevorzugt für jeden der beiden Stelldrücke ein separates Steuerventil, bevorzugt ein 312-Wege-Proportionalsteuerventil auf, das mit einem Sollwertgeber für den Drehmomentsollwert in Wirkverbindung steht und mit einer Rückführung des Ausgangsdruckes versehen ist. In diesem Fall bietet sich die Ausbildung der Steuerventile als Magnetventile an, so dass die von einem Fahrdynamikregler vorgegebenen Stelldrücke zur Erzielung der gewünschten Druckdifferenz elektrisch, d.h. als Steuerstrom oder als Steuerspannung, an das jeweilige Steuerventil übermittelt werden können. Die Rückführung des über das Steuerventil tatsächlich eingestellten Stelldruckes erfolgt zweckmäßig auf kürzestem Weg durch die Rückführung des jeweiligen Druck-Istwertes. Alternativ kann auch ein Kombinationsventil verwendet werden, das die Funktionen der genannten separaten Ventile integriert.

Weitere Einzelheiten der Erfindung ergeben sich aus der nachfolgenden ausführlichen Beschreibung und den beigefügten Zeichnungen, die beispielhaft zur Erläuterung der Erfindung dienen.

Hierzu zeigt:
- Fig. 1: ein stufenloses Getriebe eines allradgetriebenen Kraftfahrzeugs in einem schematischen Längsschnitt,
- Fig. 2: eine als Hydrauliksystem ausgeführte Regeleinrichtung des stufenlosen Getriebes nach Fig. 1 in schematischer Form, und
- Fig. 3: eine Lagerung einer Zwischenrolle des stufenlosen Getriebes nach Fig. 1 und Fig. 2 in einer perspektivischen Ansicht.

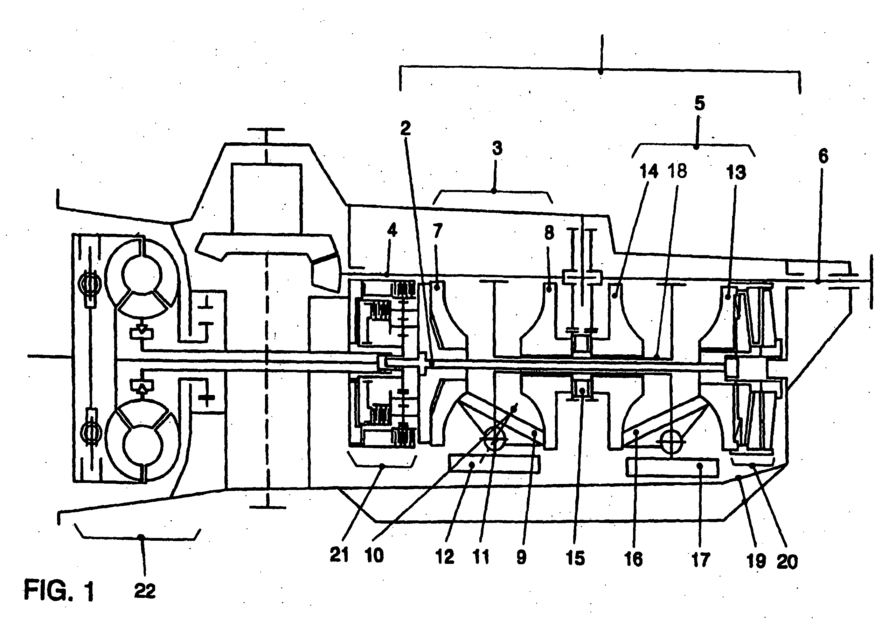

Fig. 1 zeigt ein Getriebe 1 mit stufenlos variablem Übersetzungsverhältnis, das für Kraftfahrzeuge mit zwei angetriebenen Achsen vorgesehen ist. Das Getriebe 1 weist eine Eingangswelle 2 und zwei Teilgetriebe 3, 5 in Halbtoroidbauweise auf. Das erste Teilgetriebe 3 ist mit einer ersten Ausgangswelle 4 verbunden, das zweite Teilgetriebe 5 steht dagegen mit einer von der ersten Ausgangswelle 4 unabhängig betreibbaren zweiten Ausgangswelle 6 in Verbindung.

Dem ersten Teilgetriebe 3 ist eine erste Antriebsscheibe 7 zugeordnet, die starr mit der Eingangswelle 2 verbunden ist. Axial gegenüber der ersten Antriebsscheibe 7 ist koaxial frei drehbar eine erste Abtriebsscheibe 8 angeordnet, die über eine Stirnradverzahnung oder eine Kette mit der ersten Ausgangswelle 4 in Verbindung steht. Zwischen der ersten Antriebsscheibe 7 und der ersten Abtriebsscheibe 8 sind mehrere, vorzugsweise drei erste Zwischenrollen 9 angeordnet, von denen hier nur eine einzige dargestellt ist. Die ersten Zwischenrollen 9 sind frei drehbar um zugeordnete Rotationsachsen 10 und schwenkbar um zugeordnete Kippachsen 11 derart gelagert, dass Reibkontakt einerseits zwischen der ersten Antriebsscheibe 7 und den ersten Zwischenrollen 9 und andererseits zwischen den ersten Zwischenrollen 9 und der ersten Abtriebsscheibe 8 besteht. Den ersten Zwischenrollen 9 sind erste Kraftstellelemente 12 zugeordnet, die jeweils derart ausgebildet und angeordnet sind, dass ein momentan übertragenes Drehmoment abstützbar und ein Übersetzungsverhältnis verstellbar und auf einem vorgegebenen Sollwert haltbar ist.

Dem zweiten Teilgetriebe 5 ist eine zweite Antriebsscheibe 13 zugeordnet, die axial verschiebbar, jedoch drehfest mit der Eingangswelle 2 in Verbindung steht. Eine zweite Abtriebsscheibe 14 ist axial gegenüber der zweiten Antriebsscheibe 13 koaxial frei drehbar gelagert und stützt sich über ein Axiallager 15 gegen die erste Abtriebsscheibe 8 ab. Zwischen der zweiten Antriebsscheibe 13 und der zweiten Abtriebsscheibe 14 sind mehrere, bevorzugt drei zweite Zwischenrollen 16, von denen wieder nur eine einzige dargestellt ist, baugleich zum ersten Teilgetriebe 3 derart gelagert, dass Reibkontakt einerseits zwischen der zweiten Antriebsscheibe 13 und den zweiten Zwischenrollen 16 und andererseits zwischen den zweiten Zwischenrollen 16 und der zweiten Abtriebsscheibe 14 besteht. Analog zum ersten Teilgetriebe 3 sind den zweiten Zwischenrollen 16 zweite Kraftstellelemente 17 zugeordnet.

Die beiden Abtriebsscheiben 8, 14 sind frei drehbar auf einer gehäusefesten Achse 18 gelagert, die mit dem Getriebegehäuse 19 in Verbindung steht. An dem der zweiten Antriebsscheibe 13 zugeordneten Ende der Eingangswelle 2 befindet sich eine auf die zweite Antriebsscheibe 13 wirksame Spannvorrichtung 20. Die beiden Teilgetriebe 3, 5 sind bezüglich einer zwischen den Abtriebsscheiben 8, 14 befindlichen, senkrecht zur Eingangswelle 2 liegenden fiktiven Ebene spiegelsymmetrisch angeordnet.

Dem Getriebe 1 ist eingangsseitig ein Wendegetriebe 21 zur Drehrichtungsumkehr, d.h. der Umschaltung zwischen Vorwärts- und Rückwärtsfahrt, vorgeschaltet, das mit der Eingangswelle 2 in Verbindung steht. Eingangsseitig ist dem Wendegetriebe 21 ein vorliegend als ein hydraulischer Drehmomentwandler ausgebildetes Anfahrelement 22 vorgeschaltet. Ein z.B. von einem Antriebsmotor erzeugtes Drehmoment wirkt über das Anfahrelement 22 und das Wendegetriebe 21 auf die Eingangswelle 2 des Getriebes 1. Das Anfahrelement 22 überbrückt dabei eine Drehzahldifferenz, die sich bei einem Anfahrvorgang aus einer Mindestdrehzahl des Antriebsmotors und stillstehenden Antriebsachsen des Kraftfahrzeugs ergibt.

In Fahrt wird das an der Eingangswelle 2 zur Verfügung stehende Drehmoment zunächst auf die erste Antriebsscheibe 7 des ersten Teilgetriebes 3 und die zweite Antriebsscheibe 13 des zweiten Teilgetriebes 5 übertragen. In beiden Teilgetrieben 3, 5 wird das jeweils an der Antriebsscheibe 7, 13 anliegende Drehmoment in einer Abwälzbewegung der Zwischenrollen 9, 16 durch Reibkontakt auf die jeweils zugeordnete Abtriebsscheibe 8, 14 übertragen. Dabei wird ein geometrisches Übersetzungsverhältnis durch Wälzkreisradien bestimmt, auf denen die Zwischenrollen 9, 16 auf der jeweiligen Antriebsscheibe 7, 13 und auf der jeweiligen Abtriebsscheibe 8, 14 abrollen. Die Wälzkreisradien ergeben sich unmittelbar aus der Neigung der Zwischenrollen 9, 16 um ihre Kippachsen 11. Ist der Wälzkreisradius auf der Antriebsscheibe 7, 13 größer als auf der Abtriebsscheibe 8, 14, so dreht sich die Abtriebsscheibe 8, 14 schneller als die Antriebsscheibe 7, 13, d.h. es wirkt ein kleineres Übersetzungsverhältnis i < 1, z.B. für Schnellfahrt. Bei umgekehrter Neigung der Zwischenrollen 9, 16 ergibt sich ein größeres Übersetzungsverhältnis i > 1, z.B. für Langsamfahrt. Bei gleichen Wälzkreisradien auf den Antriebsscheiben 7, 13 und den Abtriebsscheiben 8, 14, die sich ergeben, wenn die Zwischenrollen 9, 16 im wesentlichen parallel zur Eingangswelle 2 stehen bzw. deren Rotationsachsen 10 senkrecht dazu, ist das geometrische Übersetzungsverhältnis i = 1.

Das durch die beiden Teilgetriebe 3, 5 übertragbare Drehmoment wird durch zwei Faktoren bestimmt. Zum einen sorgt die Spannvorrichtung 20 für eine veränderbare axiale Anpresskraft, die durch die Verschiebbarkeit der zweiten Antriebsscheibe 13 auf der Eingangswelle 2 in Richtung der ersten Antriebsscheibe 7 gleichermaßen derart auf beide Teilgetriebe 3, 5 einwirkt, dass ein ausreichender Anpressdruck zwischen den Antriebsscheiben 7, 13, den Zwischenrollen 9, 16, und den Abtriebsscheiben 8, 14 zur sicheren Übertragung der Drehmomente durch Reibkontakt zur Verfügung steht. Zum anderen sorgen die Kraftstellelemente 12, 17 für die erforderlichen Stützkräfte der Zwischenrollen 9, 16 in Umfangsrichtung. Durch eine unterschiedliche Einstellung der auf die ersten Zwischenrollen 9 in dem ersten Teilgetriebe 3 wirksamen Stützkräfte und der auf die zweiten Zwischenrollen 16 in dem zweiten Teilgetriebe 5 wirksamen Stützkräfte wird das an der Eingangswelle 2 anliegende Drehmoment zu gleichen oder ungleichen Teilen, näherungsweise im Verhältnis der wirksamen Stützkräfte, auf die erste Ausgangswelle 4 und die zweite Ausgangswelle 6 verteilt.

Das Übersetzungsverhältnis, das in diesem Ausführungsbeispiel ebenfalls über die Kraftstellelemente 12, 17 durch ein Kippen der Zwischenrollen 9, 16 um die zugeordneten Kippachsen 11 infolge einer Verschwenkung jeweils quer zur Kippachse, wird in beiden Teilgetrieben 3, 5 im wesentlichen gleich groß eingestellt, um unterschiedliche Geschwindigkeiten an den Antriebsachsen und damit übermäßigen Schlupf an den Antriebsrädern zu vermeiden.

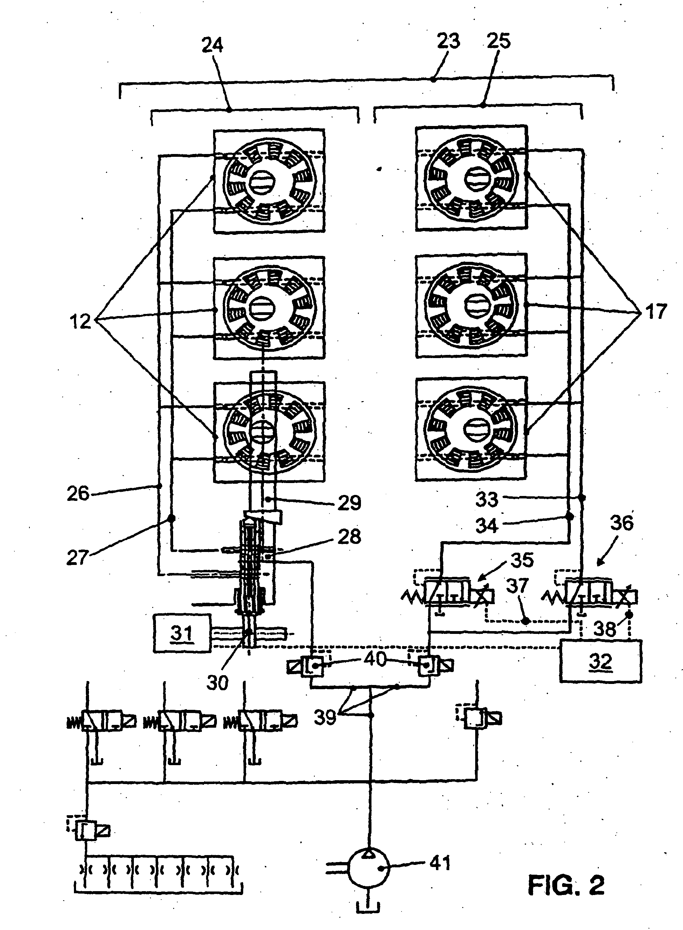

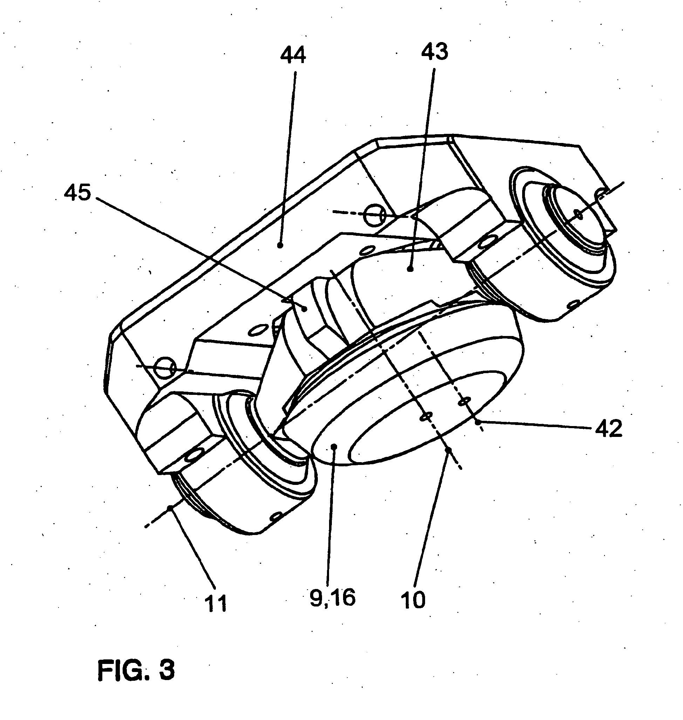

Die erfindungsgemäße Kombination der Übersetzungsregelung eines Teilgetriebes 3 mit der Momentenregelung des anderen Teilgetriebes 5 wird beispielhaft durch die Verwendung einer Regeleinrichtung 23 nach Fig. 2 in Verbindung mit einer Lagerung der Zwischenrollen 9, 16 nach Fig. 3 ermöglicht.

Fig. 2 zeigt eine Regeleinrichtung 23, die als Hydrauliksystem ausgebildet ist, und die aus zwei Zweigen 24, 25 besteht, dem ersten Zweig 24 des ersten Teilgetriebes 3, der vorliegend übersetzungsgeregelt ist, und dem zweiten Zweig 25 des zweiten Teilgetriebes 5, der vorliegend momentengeregelt ist, wobei die Zuordnung der Zweige 24, 25 zu den Teilgetrieben 3, 5 prinzipiell beliebig ist. Jeder Zweig 24, 25 weist mehrere Kraftstellelemente 12, 17 auf, entsprechend der Anzahl der Zwischenrollen 9, 16 pro Teilgetriebe 3, 5 vorliegend drei Kraftstellelemente 12, 17 pro Zweig 24, 25. Die Kraftstellelemente 12, 17 sind in Fig. 2 beispielhaft als Drehkolbensysteme ausgebildet und entsprechen den in Fig. 1 allgemein dargestellten Kraftstellelementen 12, 17.

Die Kraftstellelemente 12 des ersten Zweigs 24 sind über jeweils zwei Ringleitungen 26, 27 miteinander parallel geschaltet und an ein gemeinsames Servoventil 28 angeschlossen. Das Steuerventil 28 ist rein mechanisch wirksam ausgebildet und steht einerseits mit einem Istwertgeber 29 zur Ermittlung der Istübersetzung des Teilgetriebes 3 in Verbindung, wobei der Istwertgeber 29 vorliegend als Taster ausgebildet ist und die Neigung einer einzigen Zwischenrolle 9 des Teilgetriebes 3 mechanisch in einen Steuerkolben des Steuerventils 28 einleitet. Zum anderen steht das Steuerventil 28 mit einem Sollwertgeber 30 zur Eingabe der Sollübersetzung des Teilgetriebes 3 in Verbindung, der vorliegend als ein Gewindestift ausgebildet ist, der mechanisch mit dem Steuerkolben des Steuerventils 28 in Verbindung steht und über einen mit einer Gewindeachse versehenen Elektromotor 31 von einem Steuergerät 32 steuerbar ist.

Die Kraftstellelemente 17 des zweiten Zweigs 25 sind ebenfalls über jeweils zwei Ringleitungen 33, 34 miteinander parallel geschaltet, jedoch über jede Ringleitung 33, 34 an zwei separate Proportionalsteuerventile 35, 36 angeschlossen. Die Steuerventile 35, 36 sind vorliegend als Magnetsteuerventile mit jeweils einer Rückführung des in den angeschlossenen Ringleitungen 33, 34 wirksamen Ausgangsdrucks ausgebildet und stehen über elektrische Steuerleitungen 37, 38 mit dem Steuergerät 32 in Verbindung.

Alle vorgenannten Steuerventile 28, 35, 36 stehen jeweils eingangsseitig über Versorgungsleitungen 39 mit zwischengeschalteten Druckreglern 40 mit einer Pumpe 41 in Verbindung. Die Pumpe 41 versorgt die Steuerventile 28, 35, 36 über die Versorgungsleitungen 39 mit Drucköl, wobei durch die Druckregler 40 in jedem Zweig 24, 25 ein System- oder Hauptdruck eingestellt wird, der bedarfsweise identisch oder in jedem Zweig 24, 25 unterschiedlich sein kann. Durch den Systemdruck wird jeweils das maximal übertragbare Drehmoment und das Regelverhalten des jeweiligen Zweigs 24, 25 der Regeleinrichtung 23 festgelegt. Können oder sollen beide Teilgetrieberegelungen mit demselben Hauptdruck betrieben werden, kann statt der separaten Druckregler 40 ein gemeinsamer Druckregler verwendet werden.

Das Steuerventil 28 des ersten Zweigs 24 hat die Aufgabe, die zugeordneten Kraftstellelemente 12 des ersten Teilgetriebes 3 durch eine entsprechende Regelung der beiden Drücke in den Ringleitungen 26, 27 derart anzusteuern, dass eine Übersetzungsdifferenz, die sich aus der Information des Istwertgebers 29 und der Vorgabe des Sollwertgebers 30 ergibt, zu Null wird. Bei einem von dem gewünschten Übersetzungsverhältnis abweichenden Kippwinkel der Zwischenrollen 9, wird das Gehäuse durch die Kraftstellelemente 12 quer zur Kippachse so verschwenkt, dass dies zu einem korrigierenden Moment um die Kippachse 11 führt. Dies bedeutet im Ergebnis, dass das erste Teilgetriebe unabhängig von dem momentan übertragenen Drehmoment auf dem vorgegebenen Übersetzungsverhältnis gehalten wird.

Dagegen haben die Steuerventile 35, 36 des zweiten Zweigs 25 die Aufgabe, die zugeordneten Kraftstellelemente 17 des zweiten Teilgetriebes 5 durch eine entsprechende Regelung der beiden Drücke in den Ringleitungen 33, 34 derart anzusteuern, dass das übertragene Drehmoment auf dem durch die Druckdifferenz vorgegebenen Sollwert gehalten wird. Bei gestörtem Gleichgewicht, d.h. bei einer Abweichung des übertragenen Drehmomentes von dem Sollwert, ist der durch die Druckdifferenz eingestellte Schwenkwinkel größer oder kleiner als zur Abstützung des momentan übertragenen Drehmomentes erforderlich. Dies führt zu einer geänderten Kraftrichtungen in den Kontaktbereichen zwischen der Antriebsscheibe 13, den Zwischenrollen 16, und der Abtriebsscheibe 14 und daher zu einem Moment um die Kippachse 11 führt. Hierdurch wird das Übersetzungsverhältnis des zweiten Teilgetriebes 5 soweit verändert, bis das übertragene Drehmoment wieder dem vorgegebenen Sollwert entspricht. Dabei führt eine Vergrößerung des Übersetzungsverhältnisses (Verstellung in Richtung Underdrive) zu einer Verringerung des übertragenen Drehmomentes und eine Verkleinerung des Übersetzungsverhältnisses (Verstellung in Richtung Overdrive) zu einer Erhöhung des übertragenen Drehmomentes des Teilgetriebes 5. Im Ergebnis wird also das übertragene Drehmoment des zweiten Teilgetriebes durch die Steuerung des Übersetzungsverhältnisses auf dem vorgegebenen Sollwert gehalten.

Die Anwendung einer derartigen Übersetzungs- und Drehmomentregelung wird durch eine Lagerung der Zwischenrollen 9, 16 ermöglicht, die beispielhaft in Fig. 3 dargestellt ist. Hier ist eine Zwischenrolle 9, 16 frei drehbar um ihre Rotationsachse 10 und schwenkbar um eine exzentrisch und parallel zu der Rotationsachse 10 angeordnete Lagerachse 42 an einem Brückenträger 43 befestigt. Durch die exzentrische Lagerung der Zwischenrolle 9, 16 werden elastische Verformungen und Fertigungstoleranzen insbesondere der Antriebsscheiben 7, 13 und der Abtriebsscheiben 8, 14 ausgeglichen, so dass die an den Zwischenrollen 9, 16 wirksamen Kontaktkräfte jeweils gleich groß sind. Der Brückenträger 43 ist in einem Gehäuse 44 kippbar um die Kippachse 11 und schwenkbar um eine in etwa quer zur Kippachse und parallel zum Boden des Gehäuses 44 liegende Schwenkachse gelagert. Zudem weist der Brückenträger 43 einen Laststeg 45 auf, über den durch das in dem Gehäuse 44 untergebrachte Kraftstellelement 12, 17 gemäß Fig. 2 mittels einer Exzenterführung eine axiale Stellkraft einleitbar ist:

### Bezugszeichenliste

- 1: Getriebe
- 2: Eingangswelle
- 3: erstes Teilgetriebe
- 4: erste Ausgangswelle
- 5: zweites Teilgetriebe
- 6: zweite Ausgangswelle
- 7: (erste) Antriebsscheibe
- 8: (erste) Abtriebsscheibe
- 9: (erste) Zwischenrolle
- 10: Rotationsachse
- 11: Kippachse
- 12: (erstes) Kraftstellelement
- 13: (zweite) Antriebsscheibe
- 14: (zweite) Abtriebsscheibe
- 15: Axiallager
- 16: (zweite) Zwischenrolle
- 17: (zweites) Kraftstellelement
- 18: gehäusefeste Achse
- 19: Getriebegehäuse
- 20: Spannvorrichtung
- 21: Wendegetriebe
- 22: Anfahrelement
- 23: Regeleinrichtung
- 24: erster Zweig
- 25: zweiter Zweig
- 26: Ringleitung
- 27: Ringleitung
- 28: (Servo-)Steuerventil
- 29: Istwertgeber
- 30: Sollwertgeber
- 31: Elektromotor
- 32: Steuergerät
- 33: Ringleitung
- 34: Ringleitung
- 35: (Proportional-)Steuerventil
- 36: (Proportional-)Steuerventil
- 37: elektrische Steuerleitung
- 38: elektrische Steuerleitung
- 39: Versorgungsleitung
- 40: Druckregler
- 41: Pumpe
- 42: Lagerachse
- 43: Brückenträger
- 44: Gehäuse
- 45: Laststeg

## Patentansprüche

1. Stufenloses Getriebe, insbesondere für ein allradgetriebenes Kraftfahrzeug, mit zwei jeweils als Halbtoroidgetriebe ausgebildeten Teilgetrieben (3, 5), die jeweils eine mit einer gemeinsamen Eingangswelle (2) verbundene Antriebsscheibe (7, 13), eine jeweils mit einer separaten Ausgangswelle (4, 6) verbundene Abtriebsscheibe (8, 14), und mehrere mit Reibkontakt zwischen den beiden Triebscheiben (7, 8; 13, 14) angeordnete Zwischenrollen (9, 16) aufweis,en, wobei die Zwischenrollen (9, 16) zur Auslösung einer die jeweilige Übersetzung ändernden Verkippung um eine ihnen jeweils zugeordnete Kippachse (11) von Kraftstellelementen (12, 17) beaufschlagbar sind und wobei eine auf die Teilgetriebe (3, 5) wirksame Regeleinrichtung (23) zur Regelung der Teilgetriebe (3, 5) gemäß einer Sollwertvorgabe vorgesehen ist,
**dadurch gekennzeichnet,**
**dass** die Sollwertvorgabe die Vorgabe eines unabhängigen Sollwertes für jedes Teilgetriebe umfasst und die Regeleinrichtung (23) derart ausgebildet und angeordnet ist, dass in einem Teilgetriebe (3) die Übersetzung entsprechend einem vorgebbaren Übersetzungssollwert regelbar ist; und dass in dem anderen Teilgetriebe (5) das übertragene Drehmoment entsprechend einem vorgebbaren Drehmomentsollwert regelbar ist.

2. Stufenloses Getriebe nach Anspruch 1,
**dadurch gekennzeichnet,**
**dass** die Regeleinrichtung (23) als ein Hydrauliksystem mit mindestens einer Pumpe (41), einem Druckregler (40), und einem ersten Zweig (24) für das übersetzungsgeregelte Teilgetriebe (3) sowie einem zweiten Zweig (25) für das drehmomentgeregelte Teilgetriebe (5) ausgebildet ist, wobei jeder der beiden Zweige (24, 25) mindestens ein Steuerventil (28; 35, 36) zur Steuerung einer Druckdifferenz zwischen zwei Stelldrücken enthält, die über Ringleitungen (26, 27; 33, 34) auf die zugeordneten Kraftstellelemente (12, 17), welche auf die jeweils zugeordneten Zwischenrollen (9, 16) wirken, übertragbar ist.

3. Stufenloses Getriebe nach Anspruch 2,
**dadurch gekennzeichnet,**
**dass** der erste Zweig (24) der Regeleinrichtung (23) ein Steuerventil (28) aufweist, das mit einem Sollwertgeber (30) für den Übersetzungssollwert und mit einem Istwertgeber (29) für die Neigung zumindest einer der Zwischenrollen (9) in Wirkverbindung steht.

4. Stufenloses Getriebe nach Anspruch 3,
**dadurch gekennzeichnet,**
**dass** das Steuerventil (28) als ein Servoventil mit Vorgabehülse ausgebildet ist.

5. Stufenloses Getriebe nach einem der Ansprüche 2 bis 4,
**dadurch gekennzeichnet,**
**dass** der zweite Zweig (25) der Regeleinrichtung (23) für jeden der beiden Stelldrücke ein separates Steuerventil (35, 36) aufweist, das mit einem Sollwertgeber für den Drehmomentsollwert in Wirkverbindung steht und mit einer Rückführung des jeweiligen Druck-Istwertes versehen ist.

6. Verfahren zur Verteilung eines Drehmomentes auf zwei Ausgangswellen (4, 6) in einem stufenlosen Getriebe, mit zwei jeweils als Halbtoroidgetriebe ausgebildeten Teilgetrieben (3, 5), die jeweils eine mit einer gemeinsamen Eingangswelle (2) verbundene und eine innere Torusringfläche aufweisende Antriebsscheibe (7, 13) eine jeweils mit einer separaten Ausgangswelle (4, 6) verbundene und eine innere Torusringfläche aufweisende Abtriebsscheibe (8, 14), und mehrere zwischen den beiden Triebscheiben (7, 8; 13, 14) mit Reibkontakt auf den Torusringflächen angeordnete und jeweils um eine Kippachse (11) schwenkbare Zwischenrollen (9, 16) aufweisen, wobei die Zwischenrollen (9, 16) zur Auslösung einer die jeweilige Übersetzung ändernden Verkippung um eine ihnen jeweils zugeordnete Kippachse (11) von Kraftstelleiementen (12, 17) beaufschlagt werden, deren Ansteuerung über eine auf die Teilgetriebe (3, 5) wirksame Regeleinrichtung (23) zur Regelung der Teilgetriebe (3, 5) gemäß einer Sollwertvorgabe erfolgt,
**dadurch gekennzeichnet,**
**dass** die Sollwertvorgabe die Vorgabe eines unabhängigen Sollwertes für jedes Teilgetriebe umfasst und für ein Teilgetriebe (3) ein Übersetzungssollwert vorgegeben und über eine entsprechende Ansteuerung der auf die zugeordneten Zwischenrollen (9) wirksamen kraftstellelemente (12) eingeregelt wird, und dass für das andere Teilgetriebe (5) ein Drehmomentsollwert vorgegeben und über eine entsprechende Ansteuerung der auf die zugeordneten Zwischenrollen (16) wirksamen Kraftstelleiemente (17) eingeregelt wird.

7. Verfahren nach 6,
**dadurch gekennzeichnet,**
**dass** der Drehmomentsollwert in Form einer Druckdifferenz vorgegeben wird.

## Claims

1. Continuously variable transmission, in particular for' an all-wheel drive motor vehicle, with two part-transmissions (3, 5) which are designed in each case as semi-toroidal transmissions and which have in each case a driving disc (7, 13) connected to a common input shaft (2), a driven disc (8, 14) connected in each case to a separate output shaft (4, 6), and a plurality of intermediate rollers (9, 16) arranged with frictional contact between the two drive discs (7, 8; 13, 14), the intermediate rollers (9, 16) being able to be acted upon by power elements (12, 17) for triggering a tilt, changing the respective step-up, about a tilt axis (11) assigned in each case to them, and a regulating device (23) active on the part-transmissions (3, 5) being provided for regulating the part-transmissions (3, 5) according to a desired-value stipulation, **characterized in that** the desired-value stipulation comprises the stipulation of an independent desired value for each part-transmission, and the regulating device (23) is designed and arranged in such a way that, in one part-transmission (3), the step-up can be regulated according to a stipulatable step-up desired value, and **in that**, in the other part-transmission (5), the transferred torque can be regulated according to a stipulatable torque desired value.

2. Continuously variable transmission according to Claim 1, **characterized in that** the regulating device (23) is designed as a hydraulic system with at least one pump (41), with a pressure regulator (40) and with a first branch (24) for the step-up-regulated part-transmission (3) and a second branch (25) for the torque-regulated part-transmission (5), each of the two branches (24, 25) containing at least one control valve (28; 35, 36) for controlling a pressure difference between two actuating pressures which is transferrable via ring lines (26, 27; 33, 34) to the assigned power elements (12, 17) which act on the intermediate rollers (9, 16) assigned in each case.

3. Continuously variable transmission according to Claim 2, **characterized in that** the first branch (24) of the regulating device (23) has a control valve (28) which is operatively connected to a desired-value generator (30) for the step-up desired value and to an actual-value generator (29) for the inclination of at least one of the intermediate rollers (9).

4. Continuously variable transmission according to Claim 3, **characterized in that** the control valve (28) is designed as a servo valve with a stipulation sleeve.

5. Continuously variable transmission according to one of Claims 2 to 4, **characterized in that** the second branch (25) of the regulating device (23) has for each of the two actuating pressures a separate control valve (35, 36) which is operatively connected to a desired-value generator for the torque desired value and which is provided with a feedback of the respective pressure actual value.

6. Method for distributing a torque to two output shafts (4, 6) in a continuously variable transmission, with two part-transmissions (3, 5) which are designed in each case as semi-toroidal transmissions and which have in each case a driving disc (7, 13) connected to a common input shaft (2) and having an inner toroidal annular surface, a driven disc (8, 14) connected in each case to a separate output shaft (4, 6) and having an inner toroidal annular surface, and a plurality of intermediate rollers (9, 16) arranged between the two drive discs (7, 8; 13, 14) with frictional contact on the toroidal annular surfaces and in each case pivotable about a tilt axis (11), the intermediate rollers (9, 16) being acted upon by power elements (12, 17) for triggering a tilt, changing the respective step-up, about a tilt axis (11) assigned to them in each case, the activation of which power elements takes place via a regulating device (23), active on the part-transmissions (3, 5), for regulating the part-transmissions (3, 5) according to a desired-value stipulation, **characterized in that** the desired-value stipulation comprises the stipulation of an independent desired value for each part-transmission, and, for one part-transmission (3), a step-up desired value is stipulated and is regulated via a corresponding activation of the power elements (12) active on the assigned intermediate rollers (9), and **in that**, for the other part-transmission (5), a torque desired value is stipulated and is regulated via a corresponding activation of the power elements (17) active on the assigned intermediate rollers (16).

7. Method according to Claim 6, **characterized in that** the torque desired value is stipulated in the form of a pressure difference.

## Revendications

1. Boîte à variation continue, notamment pour un véhicule automobile à traction intégrale, avec deux boîtes partielles (3, 5) prenant respectivement la forme de boîtes semi-toroïdales qui comportent respectivement un disque d'entraînement d'entrée (7, 13) relié à un arbre d'entrée (2) commun, un disque d'entraînement de sortie (8, 14) relié respectivement à un arbre de sortie (4, 6) séparé et plusieurs rouleaux intermédiaires (9, 16) disposés avec contact de frottement entre les deux disques d'entraînement (7, 8 ; 13, 14), les rouleaux intermédiaires (9, 16) pouvant être chargés autour d'un axe de culbutement (11) d'éléments de réglage de forces (12, 17) lui étant respectivement associés pour déclencher un culbutement faisant varier la démultiplication respective et un dispositif de réglage (23) agissant sur la boîte partielle (3, 5) étant prévu pour régler la boîte partielle (3, 5) en fonction d'un objectif de valeur théorique, **caractérisée en ce que** l'objectif de valeur théorique comprend la prédéfinition d'une valeur théorique indépendante pour chaque boite partielle, que le dispositif de réglage (23) est réalisé et disposé de telle sorte que dans une boîte partielle (3), la démultiplication peut être réglée en fonction d'une valeur théorique de démultiplication prédéfinie et que dans l'autre boîte partielle (5), le couple transmis peut être réglé en fonction d'une valeur théorique de couple prédéfinie.

2. Boîte à variation continue selon la revendication 1, **caractérisée en ce que** le dispositif de réglage (23) prend la forme d'un système hydraulique avec au moins une pompe (41), un régulateur de pression (40) et une première dérivation (24) pour la boîte partielle (3) à réglage de démultiplication ainsi qu'une deuxième dérivation (25) pour la boîte partielle (5) à réglage de couple, chacune des deux dérivations (24, 25) contenant au moins une vanne de commande (28 ; 35, 36) pour commander une différence de pression entre deux pressions de réglage, ladite différence pouvant être transmise via des conduites annulaires (26, 27 ; 33, 34) aux éléments de réglage de forces (12, 17) associés agissant sur les rouleaux intermédiaires (9, 16) respectivement associés.

3. Boîte à variation continue selon la revendication 2, **caractérisée en ce que** la première dérivation (24) du dispositif de réglage (23) comporte une vanne de commande (28) en liaison efficace avec un capteur de valeur théorique (30) pour la valeur théorique de démultiplication et avec un capteur de valeur réelle (29) pour l'inclinaison d'au moins un des rouleaux intermédiaires (9). ,

4. Boîte à variation continue selon la revendication 3, **caractérisée en ce que** la vanne de commande (28) prend la forme d'une servovanne pourvue d'une enveloppe prédéfinie.

5. Boîte à variation continue selon l'une quelconque des revendications 2 à 4, **caractérisée en ce que** la deuxième dérivation (25) du dispositif de réglage (23) comporte pour chacune des deux pressions de réglage une vanne de commande (35, 36) séparée qui est en liaison efficace avec un capteur de valeur théorique pour la valeur théorique de couple et est pourvue d'une rétroaction de la valeur réelle respective de pression.

6. Procédé de distribution d'un couple sur deux arbres de sortie (4, 6) dans une boîte à variation continue, avec deux boîtes partielles (3, 5) respectivement réalisées sous la forme de boîtes semi-toroïdales comportant respectivement un disque d'entraînement d'entrée (7, 13) relié à un arbre d'entrée (2) commun et comportant une surface de bague torique intérieure, un disque d'entraînement de sortie (8, 14) respectivement relié à un arbre de sortie (4, 6) et comportant une surface de bague torique intérieure et plusieurs rouleaux intermédiaires (9, 16) disposés entre les deux disques d'entraînement (7, 8 ; 13, 14) avec contact de frottement sur les surfaces de bague torique et pouvant respectivement pivoter autour d'un axe de culbutement (11), les rouleaux intermédiaires (9, 16) étant chargés pour déclencher un culbutement faisant varier la démultiplication respective autour d'un axe de culbutement (11) d'éléments de réglage de forces (12, 17) lui étant respectivement associés, le pilotage desdits éléments se produisant via un dispositif de réglage (23) agissant sur la boîte partielle (3, 5) pour régler la boîte partielle (3, 5) en fonction d'un objectif de valeur théorique, **caractérisé en ce que** l'objectif de valeur théorique comprend la prédéfinition d'une valeur théorique indépendante pour chaque boîte partielle, qu'une valeur théorique de démultiplication est prédéfinie pour une boîte partielle (3) et réglée via un pilotage correspondant des éléments de réglage de forces (12) agissant sur les rouleaux intermédiaires (9) associés et qu'une valeur théorique de couple est prédéfinie pour l'autre boîte partielle (5) et est réglée via un pilotage correspondant des éléments de réglage de forces (17) agissant sur les rouleaux intermédiaires (16) associés.

7. Procédé selon la revendication 6, **caractérisé en ce que** la valeur théorique de couple est prédéfinie sous la forme d'une différence de pression.
